# EUROPÄISCHE PATENTSCHRIFT

(11) **EP 1 673 254 B1**
(45) Veröffentlichungstag und Bekanntmachung des Hinweises auf die Patenterteilung: **26.06.2013**
(21) Anmeldenummer: 04765205.2
(22) Anmeldetag: 15.09.2004
(51) Int. Cl.: B60K 17/08

(54) **FAHRZEUGGETRIEBE**
VEHICLE GEARBOX
BOITE DE VITESSES DE VEHICULE

(30) Priorität: 13.10.2003 DE 10347493
(43) Veröffentlichungstag der Anmeldung: 28.06.2006
(73) Patentinhaber: ZF FRIEDRICHSHAFEN Aktiengesellschaft, 88038 Friedrichshafen (DE)
(72) Erfinder: BADER, Josef, 88045 Friedrichshafen (DE)
(86) Internationale Anmeldenummer: PCT/EP2004/010291
(87) Internationale Veröffentlichungsnummer: WO 2005/037590

(56) Entgegenhaltungen:
- EP-A1- 1 059 470
- DE-A1- 19 627 980
- DE-A1- 19 951 414
- FR-A- 2 595 299
- FR-A1- 2 757 460
- FR-A1- 2 830 586
- GB-A- 2 119 460

## Beschreibung

Die Erfindung betrifft ein Fahrzeuggetriebe mit den Merkmalen des Oberbegriffs von Anspruch 1.

Fahrzeuggetriebe weisen bei modernen Konstruktionen eine große Anzahl an Funktionalitäten auf, die im Gehäuse des Fahrzeuggetriebes untergebracht werden müssen. Sollen bei automatisierten Getrieben auch die Aktuatoren in oder am Getriebe integriert werden, so sind die Ausgestaltungen der Getriebe aufwendig und kostenintensiv. Gleichzeitig gilt es die Anforderung nach praxisgerechter Montage des Getriebes zu erfüllen, so dass es dem Monteur erleichtert wird, die einzelnen Bauelemente des Getriebes sachgerecht und unter Umgehung allzu aufwendiger Montagemethoden zusammenzufügen.

Beispielgebend zeigt die DE-A1 44 22 900 der Anmelderin ein Fahrzeuggetriebe mit einer Anschlussplatte, die mit Verschraubungen fest am Getriebegehäuse befestigt ist und die in einem sich zu einer Kupplungseinrichtung hin erstreckenden Bereich des Gehäuses angeordnet ist. Auf einer der Vorgelegewellen des Fahrzeuggetriebes ist eine Getriebebremse angeordnet, von der Teile in der Anschlussplatte vorgesehen sind. Die Anordnung von Betätigungselementen zur Betätigung der drehmomentübertragenden Bauteile in dem Getriebe und die Anordnung einer Kupplungsbetätigung werden nicht beschrieben. Den Stand der Technik nach dem Oberbegriff des Anspruchs 1 stellt hier die EP 1059470 das.

Der Erfindung liegt die Aufgabe zugrunde, Betätigungselemente eines Fahrzeuggetriebes an zentraler Stelle praxis- und montagegerecht zu integrieren.

Die Aufgabe wird gelöst durch ein Fahrzeuggetriebe mit den Merkmalen nach Anspruch 1, Ausgestaltungen sind Gegenstand von Unteransprüchen.

Ein Fahrzeuggetriebe umfasst ein Gehäuse, in oder an dem drehmomentübertragende Bauteile vorgesehen sind. Dazu gezählt wird auch eine Kupplungseinrichtung zwischen dem Fahrzeuggetriebe und einer das Fahrzeuggetriebe antreibenden Antriebsmaschine. An oder in dem Gehäuse sind Betätigungselemente zur Betätigung der drehmomentübertragenden Bauteile angeordnet. Das Gehäuse umfasst einen sich in Richtung der Kupplungseinrichtung erstreckenden Bereich, in dem eine mit dem Gehäuse fest verbindbare Anschlussplatte vorgesehen ist. In dieser Anschlussplatte sind Aufnahmen für zumindest Teile der Betätigungselemente zur Betätigung der drehmomentübertragenden Bauteile vorgesehen. In einer vorteilhaften Ausgestaltung der Erfindung ist in der Anschlussplatte eine Aufnahme für zumindest Teile einer Betätigungseinrichtung der Kupplungseinrichtung zwischen Antriebsmaschine und Fahrzeuggetriebe vorgesehen. Vorzugsweise ist dabei die Kupplungseinrichtung eine Kupplung mit Zentralausrückung. In besonders vorteilhafter Weise ist die Anschlussplatte an der Kupplungseinrichtung in Form von zwei ineinanderliegenden Rohren ausgebildet und in dem Ringraum zwischen den Rohren ist ein Betätigungskolben axial zwischen den beiden Rohren beweglich angeordnet.

In einer weiteren vorteilhaften Ausbildung der Erfindung ist in der Anschlussplatte eine Aufnahme für die Betätigungselemente zur Schaltung von Zahnrädern des Fahrzeuggetriebes in einen oder aus einem drehmomentübertragenden Zustand vorgesehen. Vorzugsweise sind die Betätigungselemente Teile einer Schaltung eines Hauptgetriebeteils, und/oder eines Splitgruppengetriebeteils und/oder eines Bereichsgruppengetriebeteils des Fahrzeuggetriebes. Dabei umfassen die Betätigungselemente in vorteilhafter Weise pneumatische Zylinder, bei denen ein Teil des Zylinders von der Anschlussplatte gebildet ist und ein Teil des Zylinders von dem Gehäuse gebildet ist.

Eine derart ausgebildetes Fahrzeuggetriebe mit Anschlussplatte ermöglich die vorteilhafte und montagefreundliche Integration vieler wesentlicher Bauteile und Funktionselemente an einer zentralen Stelle. Neben der Kupplungsbetätigung und der Betätigung der Schaltelemente sind zumindest Teile der Getriebebremse und der Getriebeölpumpe in dieser Anschlussplatte vorgesehen. Die Anschlussplatte kann unabhängig vom sonstigen Getriebegehäuse herstellt werden und ist von daher an allen Stellen leicht zugänglich für Bearbeitungswerkzeuge. Durch Verschraubungen ist eine einfache Verbindung der Anschlussplatte mit dem Gehäuse während der Montage des Fahrzeuggetriebes gewährleistet.

Die Erfindung wird anhand einer Zeichnung näher erläutert.
Es zeigen:
- Fig. 1: einen Schnitt durch einen Teil des Fahrzeuggetriebes und
- Fig. 2: einen weiteren Schnitt nach Fig. 1.

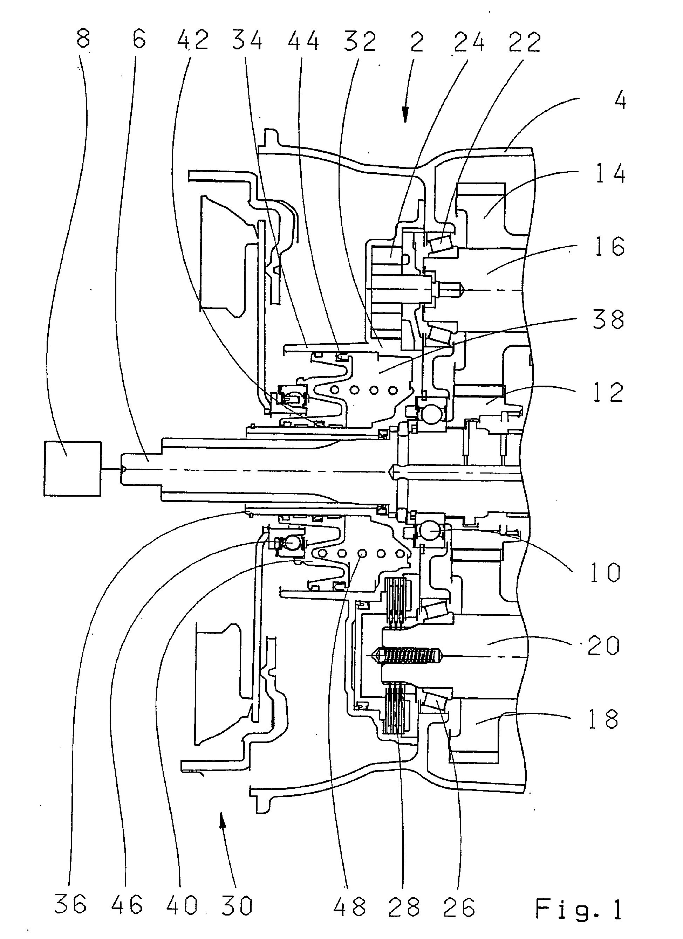

In der Fig. 1 wird ein Fahrzeuggetriebe 2 gezeigt, das ein Gehäuse 4 umfasst. Eine Eingangswelle 6 ist mit einer Antriebsmaschine 8 verbunden, die in der Regel ein Verbrennungsmotor ist, und ist im Gehäuse 4 in einem Lager 10 drehbar gelagert. Auf der Eingangswelle 6 ist ein Zahnrad 12 drehbar gelagert, das mit einem Zahnrad 14 auf einer ersten Vorgelegewelle 16 und mit einem Zahnrad 18 auf einer zweiten Vorgelegewelle 20 kämmt.

Die Erfindung ist hier anhand eines Fahrzeuggetriebes 2 mit einer Leistungsverteilung auf zwei Vorgelegewellen beschrieben. Sie gilt jedoch in gleicher Weise auch für ein Fahrzeuggetriebe mit einer Vorgelegewelle.

Die erste Vorgelegewelle 16 ist in einem Kegelrollenlager 22 im Gehäuse 4 gelagert und trägt an ihrem einen Ende eine von der Vorgelegewelle 16 angetriebene Zahnradpumpe 24 zur Förderung des Schmieröls im Getriebe. Die zweite Vorgelegewelle 20 ist in einem Kegelrollenlager 26 im Gehäuse 4 gelagert und trägt an ihrem einen Ende eine die Vorgelegewelle 20 und damit das gesamte Fahrzeuggetriebe 2 abbremsende Getriebebremse 28 nach bekannter Bauart, die beispielsweise bei Schaltvorgängen eingesetzt wird. Um die Eingangswelle 6 herum ist zwischen dem Fahrzeuggetriebe 2 und der Antriebsmaschine 8 eine Kupplungseinrichtung 30 in bekannter Bauart angeordnet, die nicht Gegenstand der Erfindung ist und von der hier nur Teile zur Veranschaulichung dargestellt sind.

In dem Bereich des Gehäuses 4, der sich zur Kupplungseinrichtung 30 hin erstreckt, ist eine Anschlussplatte 32 angeordnet, die fest mit dem Gehäuse verbunden ist, beispielsweise über hier nicht gezeigte Verschraubungen. Die Anschlussplatte 32 nimmt in bekannter Weise zumindest Teile der Getriebeölpumpe 24 und der Getriebebremse 28 auf. Darüber hinaus ist die Anschlussplatte 32 im Bereich der Eingangswelle 6 derart geformt, dass sie zwei konzentrisch ineinanderliegende Rohre 34 und 36 bildet. In dem Ringraum 38 zwischen den Rohren 34 und 36 ist ein Ringkolben 40 vorgesehen. Nach radial innen zum Rohr 36 hin weist der Ringkolben 40 eine erste Dichtung 42 auf, und nach radial außen zum Rohr 34 hin weist der Ringkolben eine zweite Dichtung 44 auf. Die Dichtungen 42 und 44 dichten den Ringraum 38 luftdicht zur Umgebung ab, so dass der Ringkolben 42 durch ein in den Ringraum 38 eingefülltes Betätigungsmittel, vorzugsweise Druckluft, axial bewegt werden kann und ein Ausrücklager 46 zum Öffnen der Kupplungseinrichtung 30 betätigen kann. Die Druckluftzufuhr kann direkt durch das Gehäuse erfolgen, wodurch Schläuche und Rohre zur Druckluftzufuhr verzichtbar werden. Elektrische Zuleitungen für einen hier nicht gezeigten Wegsensor an der Kupplungseinrichtung 30 können ebenfalls direkt durch das Gehäuse 4 bzw. die Anschlussplatte 32 geführt werden. Zur Unterstützung der Bewegung des Ringkolbens 40 ist eine Ringfeder 48 vorgesehen, die im Ringraum 38 zwischen dem Ringkolben 40 und der Anschlussplatte 32 angeordnet ist.

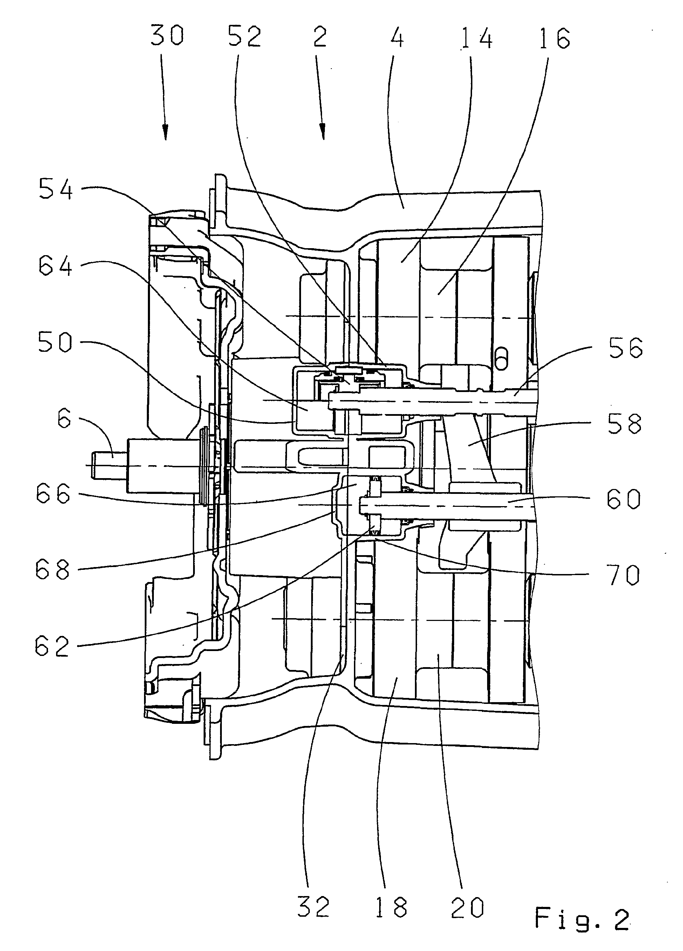

Die Fig. 2 zeigt für gleiche Bauteile die gleichen Bezugszeichen wie die Fig. 1. Darüber hinaus zeigt die Fig. 2 in der Anschlussplatte 32 einen ersten Zylinderteil 50, der zusammen mit einem zweiten Zylinderteil 52, der im Gehäuse 4 gebildet ist, einen Betätigungszylinder 64 für eine hier nicht näher dargestellte Schalteinrichtung in einem Hauptgetriebeteil des Fahrzeuggetriebes 2 bildet. Dazu ist in dem von den beiden Zylinderteilen 50 und 52 gebildeten Betätigungszylinder 64 ein axial beweglicher Kolben 54 eingesetzt, an dem eine Schaltstange 56 befestigt ist, die bis zum Hauptgetriebeteil reicht. Dieser Kolben 54 wird ebenfalls von Druckluft betätigt, die durch hier nicht gezeigte Bohrungen in der Anschlussplatte 32 bzw. dem Gehäuse 4 zum Betätigungszylinder 64 geleitet wird.

Eine Schiebemuffe 58 gehört zu einem Splitgruppengetriebe, das dem Hauptgetriebeteil vorgeschaltet ist. Die Betätigung der Schiebemuffe 58 geschieht über eine Schaltstange 60, die mit einem Kolben 62 verbunden ist. Der Kolben 62 ist in einem Betätigungszylinder 66 axial beweglich angeordnet und wird von Druckluft betätigt, deren Zuführung zum Betätigungszylinder 66 ebenfalls in Bohrungen des Gehäuses 4 oder der Anschlussplatte 32 vorgesehen sein kann. Ein erster Zylinderteil 68 des Betätigungszylinders 66 ist in der Anschlussplatte 32 vorgesehen und ein zweiter Zylinderteil 70 wird vom Gehäuse 4 gebildet.

In einem hier nicht gezeigten dritten Zylinder kann auch noch ein dritter Kolben angeordnet werden, der über eine weitere Schaltstange die Schiebemuffe eines dem Hauptgetriebe nachgeschalteten Bereichsgruppengetriebes schaltet.

**Bezugszeichen**

| | | | |
|---|---|---|---|
| 2 | Fahrzeuggetriebe | 60 | Schaltstange |
| 4 | Gehäuse | 62 | Kolben |
| 6 | Eingangswelle | 64 | Betätigungszylinder |
| 8 | Antriebsmaschine | 66 | Betätigungszylinder |
| 10 | Lager | 68 | Zylinderteil |
| 12 | Zahnrad | 70 | Zylinderteil |
| 14 | Zahnrad | | |
| 16 | Vorgelegewelle | | |
| 18 | Zahnrad | | |
| 20 | Vorgelegewelle | | |
| 22 | Kegelrollenlager | | |
| 24 | Zahnradpumpe | | |
| 26 | Kegelrollenlager | | |
| 28 | Getriebebremse | | |
| 30 | Kupplungseinrichtung | | |
| 32 | Anschlussplatte | | |
| 34 | Rohr | | |
| 36 | Rohr | | |
| 38 | Ringraum | | |
| 40 | Ringkolben | | |
| 42 | Dichtung | | |
| 44 | Dichtung | | |
| 46 | Ausrücklager | | |
| 48 | Ringfeder | | |
| 50 | Zylinderteil | | |
| 52 | Zylinderteil | | |
| 54 | Kolben | | |
| 56 | Schaltstange | | |
| 58 | Schiebemuffe | | |

## Patentansprüche

1. Fahrzeuggetriebe (2) mit einem Gehäuse (4), in oder an dem drehmomentübertragende Bauteile (14, 16, 18, 20, 30) vorgesehen sind, die eine zwischen dem Fahrzeuggetriebe (2) und einer das Fahrzeuggetriebe (2) antreibenden Antriebsmaschine (8) angeordnete Kupplungseinrichtung (30) umfassen, und in oder an dem Betätigungselemente (40, 46, 56, 60, 64, 66) zur Betätigung der drehmomentübertragenden Bauteile (14, 16, 18, 20, 30) angeordnet sind, und bei dem das Gehäuse (4) einen sich in Richtung der Kupplungseinrichtung (30) erstreckenden Bereich umfasst, in dem eine mit dem Gehäuse (4) fest verbindbare Anschlussplatte (32) vorgesehen ist, und in der Anschlussplatte (32) Aufnahmen für zumindest Teile der Betätigungselemente (40, 46, 56, 60, 64, 66) zur Betätigung der drehmomentübertragenden Bauteile (14, 16, 18, 20, 30) vorgesehen sind, wobei in der Anschlussplatte (32) eine Aufnahme für zumindest Teile einer Betätigungseinrichtung (40, 46) der Kupplungseinrichtung (30) zwischen Antriebsmaschine (8) und Fahrzeuggetriebe (2) vorgesehen ist, **dadurch gekennzeichnet, dass** in der Anschlussplatte (32) eine Aufnahme für die Betätigungszylinder (64, 66) zur Schaltung von Zahnrädern (14, 18) des Fahrzeuggetriebes (2) in einen oder aus einem drehmomentübertragenden Zustand vorgesehen ist und die Betätigungszylinder (64, 66) pneumatische Zylinder umfassen, bei denen ein Teil (50, 58) des Zylinders (64, 66) von der Anschlussplatte (32) gebildet ist und ein Teil (52, 70) des Zylinders (64, 66) von dem Gehäuse (4) gebildet ist.

2. Fahrzeuggetriebe (2) nach Anspruch 1, **dadurch gekennzeichnet, dass** die Kupplungseinrichtung (30) eine Kupplung mit Zentralausrückung ist.

3. Fahrzeuggetriebe (2) nach einem der Ansprüche 1 oder 2, **dadurch gekennzeichnet, dass** die Anschlussplatte (32) an der Kupplungseinrichtung (30) in Form von zwei ineinanderliegenden Rohren (34, 36) ausgebildet ist und in dem Ringraum (38) zwischen den Rohren (34, 36) ein Betätigungskolben (40) axial zwischen den beiden Rohren (34, 36) beweglich angeordnet ist.

4. Fahrzeuggetriebe (2) nach einem der Ansprüche 1 bis 3, **dadurch gekennzeichnet, dass** die Betätigungszylinder Teile einer Schaltung (64) eines Hauptgetriebeteils des Fahrzeuggetriebes (2) umfassen.

5. Fahrzeuggetriebe (2) nach einem der Ansprüche 1 bis 4, **dadurch gekennzeichnet, dass** die Betätigungszylinder Teile einer Schaltung (66) eines Splitgruppengetriebeteils des Fahrzeuggetriebes (2) umfassen.

6. Fahrzeuggetriebe (2) nach einem der Ansprüche 1 bis 5, **dadurch gekennzeichnet, dass** die Betätigungselemente Teile einer Schaltung eines Bereichsgruppengetriebeteils des Fahrzeuggetriebes umfassen.

## Claims

1. Vehicle gearbox (2) with a housing (4), in or on which torque-transmitting components (14, 16, 18, 20, 30) are provided, which comprise a clutch device (30) arranged between the vehicle gearbox (2) and a drive machine (8) which drives the vehicle gearbox (2), and in or on which actuating elements (40, 46, 56, 60, 64, 66) for actuating the torque-transmitting components (14, 16, 18, 20, 30) are arranged, and in the case of which the housing (4) comprises a region extending in the direction of the clutch device (30), in which region a connection plate (32) which can be connected fixedly to the housing (4) is provided, and in the connection plate (32) receptacles for at least parts of the actuating elements (40, 46, 56, 60, 64, 66) for actuating the torque-transmitting components (14, 16, 18, 20, 30) are provided, wherein in the connection plate (32) a receptacle for at least parts of an actuating device (40, 46) of the clutch device (30) is provided between drive machine (8) and vehicle gearbox (2), **characterized in that** in the connection plate (32) a receptacle for the actuating cylinders (64, 66) for shifting gear wheels (14, 18) of the vehicle gearbox (2) into a or out of a torque-transmitting state is provided and the actuating cylinders (64, 66) comprise pneumatic cylinders in which a part (50, 58) of the cylinder (64, 66) is formed by the connection plate (32) and a part (52, 70) of the cylinder (64, 66) is formed by the housing (4).

2. Vehicle gearbox (2) according to Claim 1, **characterized in that** the clutch device (30) is a clutch with central disengagement.

3. Vehicle gearbox (2) according to one of Claims 1 and 2, **characterized in that** the connection plate (32) on the clutch device (30) is in the form of two tubes (34, 36) which lie within one another and an actuating piston (40) is arranged movably axially between the two tubes (34, 36) in the annular chamber (38) between the tubes (34, 36).

4. Vehicle gearbox (2) according to one of Claims 1 to 3, **characterized in that** the actuating cylinders comprise parts of a shift (64) of a main gearbox part of the vehicle gearbox (2).

5. Vehicle gearbox (2) according to one of Claims 1 to 4, **characterized in that** the actuating cylinders comprise parts of a shift (66) of a split group gearbox part of the vehicle gearbox (2).

6. Vehicle gearbox (2) according to one of Claims 1 to 5, **characterized in that** the actuating elements comprise parts of a shift of a range group gearbox part of the vehicle gearbox.

## Revendications

1. Boîte de vitesses de véhicule (2) comprenant un boîtier (4) dans ou sur lequel sont prévus des composants (14, 16, 18, 20, 30) transmettant le couple qui comprennent un dispositif d'embrayage (30) disposé entre la boîte de vitesses de véhicule (2) et une machine d'entraînement (8) entraînant la boîte de vitesses de véhicule (2), et dans ou sur lequel sont disposés des éléments d'actionnement (40, 46, 56, 60, 64, 66) pour l'actionnement des composants (14, 16, 18, 20, 30) transmettant le couple, et où le boîtier (4) comprend une région s'étendant dans la direction du dispositif d'embrayage (30), dans laquelle est prévue une plaque de raccordement (32) pouvant être connectée fixement au boîtier (4), et des logements sont prévus dans la plaque de raccordement (32) pour au moins des parties des éléments d'actionnement (40, 46, 56, 60, 64, 66) pour l'actionnement des composants (14, 16, 18, 20, 30) transmettant le couple, un logement pour au moins des parties d'un dispositif d'actionnement (40, 46) du dispositif d'embrayage (30) étant prévu dans la plaque de raccordement (32) entre la machine d'entraînement (8) et la boîte de vitesses de véhicule (2), **caractérisée en ce qu'**un logement pour les cylindres d'actionnement (64, 66) est prévu dans la plaque de raccordement (32) pour commuter des roues dentées (14, 18) de la boîte de vitesses de véhicule (2) dans un état transmettant le couple ou hors de cet état, et les cylindres d'actionnement (64, 66) comprennent des cylindres pneumatiques, dans lesquels une partie (50, 58) du cylindre (64, 66) est formée par la plaque de raccordement (32) et une partie (52, 70) du cylindre (64, 66) est formée par le boîtier (4).

2. Boîte de vitesses de véhicule (2) selon la revendication 1, **caractérisée en ce que** le dispositif d'embrayage (30) est un embrayage avec débrayage central.

3. Boîte de vitesses de véhicule (2) selon l'une quelconque des revendications 1 ou 2, **caractérisée en ce que** la plaque de raccordement (32) est réalisée au niveau du dispositif d'embrayage (30) sous forme de deux tubes (34, 36) disposés l'un dans l'autre et un piston d'actionnement (40) est disposé de manière déplaçable axialement entre les deux tubes (34, 36) dans l'espace annulaire (38) entre les tubes (34, 36).

4. Boîte de vitesses de véhicule (2) selon l'une quelconque des revendications 1 à 3, **caractérisée en ce que** les cylindres d'actionnement comprennent des parties d'un circuit (64) d'une partie de boîte de vitesses principale de la boîte de vitesses de véhicule (2).

5. Boîte de vitesses de véhicule (2) selon l'une quelconque des revendications 1 à 4, **caractérisée en ce que** les cylindres d'actionnement comprennent des parties d'un circuit (66) d'une partie d'un doubleur de gamme de la boîte de vitesses de véhicule (2).

6. Boîte de vitesses de véhicule (2) selon l'une quelconque des revendications 1 à 5, **caractérisée en ce que** les éléments d'actionnement comprennent des parties d'un circuit d'une partie d'un groupe-relais de la boîte de vitesses de véhicule.
